# EUROPEAN PATENT APPLICATION

(11) **EP 4 693 721 A1**
(43) Date of publication of application: **11.02.2026**
(21) Application number: 24889034.5
(22) Date of filing: 31.10.2024
(51) Int. Cl.: H01M 50/609, H01M 50/627, H01M 50/107, H01M 50/167, H01M 50/531

(54) **ELECTROLYTE INJECTION JIG AND ELECTROLYTE INJECTION METHOD**

(30) Priority: 06.11.2023 KR 20230152121
(71) Applicant: LG Energy Solution, Ltd., Seoul 07335 (KR)
(72) Inventor: LEE, Chang-Yong, Daejeon 34122 (KR); LEE, Ja-Sool, Daejeon 34122 (KR); LEE, Je-Jun, Daejeon 34122 (KR); JUNG, Ji-Min, Daejeon 34122 (KR)
(74) Representative: Goddar, Heinz J.
(86) International application number: PCT/KR2024/016975
(87) International publication number: WO 2025/100846

(57) **Abstract**

An electrolyte injection jig according to an embodiment of the present disclosure is configured to connect an electrolyte supply device that supplies an electrolyte and an opening formed on one side of a battery housing, and the electrolyte injection jig may include a device coupling portion coupled to the electrolyte supply device and a battery insertion portion configured to be inserted into the opening and to be in close contact with an inner surface of the battery housing, wherein the battery insertion portion may have a protrusion at a part in contact with the battery housing.

## Description

### TECHNICAL FIELD

The present disclosure relates to an electrolyte injection jig and an electrolyte injection method.

This application is based on and claims priority from Korean Patent Application No. 10-2023-0152121 filed on November 6, 2023, with the Korean Intellectual Property Office, the disclosure of which is incorporated herein in its entirety by reference.

### BACKGROUND ART

An electrolyte together with an electrode assembly may be accommodated inside a battery. In the manufacture of the battery, the sealing of a housing constituting the battery is completed, and then a hole may be formed again for injection of the electrolyte, or the electrolyte may be injected before the sealing of the housing is completed, and then the housing may be sealed.

For example, in the case of a cylindrical battery, the electrolyte may be injected after the electrode assembly is inserted through an opening on one side of the battery housing. The electrolyte may be injected by inserting one side of an electrolyte injection jig configured to connect an electrolyte supply device and the battery into the opening of the battery housing and supplying the electrolyte using the electrolyte supply device connected to the other side.

During the electrolyte injection process, it is necessary to prevent the electrolyte from leaking out of the battery. To prevent the electrolyte from leaking, the connection part between the injection device and the battery needs to be well sealed.

In particular, if sealing is released at any part between the battery housing and the electrolyte injection jig, the electrolyte flows out, which may cause a problem of weakening the overall seal.

Therefore, there is a need to develop an electrolyte injection jig having a structure capable of solving these problems.

### DISCLOSURE

### Technical Problem

The present disclosure is designed to solve the problems of the related art, and therefore the present disclosure is directed to providing an electrolyte injection jig configured to enhance a sealing force at the connection part with the battery housing.

However, technical problems to be solved by the present disclosure are not limited to the above-described problems, and other problems not mentioned herein may be clearly understood by those skilled in the art from the following description of the present disclosure.

### Technical Solution

An electrolyte injection jig according to an embodiment of the present disclosure for solving the above-described problem is configured to connect an electrolyte supply device that supplies an electrolyte and an opening formed on one side of a battery housing, and

the electrolyte injection jig may include a device coupling portion coupled to the electrolyte supply device and a battery insertion portion configured to be inserted into the opening and to be in close contact with an inner surface of the battery housing,

wherein the battery insertion portion may have a protrusion at a part in contact with the battery housing.

The protrusion may have a first protrusion at a part in contact with an upper portion of a beading portion provided in the battery housing.

The protrusion may have a second protrusion at a part in contact with an inner surface adjacent to an end of the battery housing.

The first protrusion may include a plurality of wings that extend along a circumference of the battery housing and are disposed adjacent to each other along a radial direction of the battery housing.

As pressed toward the beading portion, the plurality of wings may be configured to slide at ends thereof inward or outward along a radial direction of a battery to be in close contact with the beading portion of the battery housing.

The device coupling portion may be configured to surround an end of the battery housing.

The device coupling portion may have an insertion groove formed along a circumference of the battery insertion portion and configured to allow an end of the battery housing to be inserted thereinto.

The insertion groove may have a width corresponding to a thickness of the battery housing.

An electrolyte injection method according to an embodiment of the present disclosure for solving the above-described problem is a method for injecting an electrolyte into a battery through an opening formed on one side of a battery housing, and

the electrolyte injection method may include an insertion step of inserting an electrolyte injection jig into the opening; a seating step of inserting a battery insertion portion provided in the electrolyte injection jig into the opening and seating it on a beading portion provided in the battery housing; a close contact step of pressing the electrolyte injection jig toward the insertion direction to allow an end of the battery insertion portion to slide and to be in close contact with an upper portion of the beading portion; and an injection step of injecting an electrolyte into a battery through the electrolyte injection jig.

The close contact step may be a step for allowing an end of the battery insertion portion to be folded inwardly or outwardly of a battery at an upper portion of the beading portion.

The battery may include a current collector electrically connected to an electrode assembly accommodated within the battery housing,
wherein the current collector may be located on the beading portion.

The current collector may be connected to the battery housing on the beading portion discontinuously along a circumferential direction of the battery housing.

### Advantageous Effects

According to one aspect of the present disclosure, the protrusion may increase a contact area with the battery housing. The protrusion may increase a frictional force with the battery housing by protruding toward the battery housing. Therefore, the protrusion may enhance a sealing force of the battery insertion portion inserted into the battery housing.

According to another aspect of the present disclosure, double sealing may be achieved by the first protrusion in contact with the beading portion of the battery housing and the second protrusion in contact with the inner surface adjacent to the end of the battery housing. It is possible to effectively prevent the electrolyte from leaking toward the opening of the battery housing along the beading portion of the battery housing. In particular, the sealing force may be enhanced by the first protrusion composed of the plurality of wings. The number of the plurality of wings of the first protrusion and the number of the plurality of protrusions of the second protrusion may be adjusted depending on the required sealing force.

According to still another aspect of the present disclosure, the inner surface of the beading portion formed by press-fitting the circumference of the battery housing inward may not be a completely flat surface, and other components may be positioned on the beading portion. Therefore, even if the end of the battery insertion portion is brought into close contact with the beading portion, there is a possibility that the sealing at the contact interface between the battery insertion portion and the beading portion may be incomplete. Therefore, the end of the plurality of wings may be configured to slide inward or outward along the radial direction of the battery on the beading portion to be in close contact with the beading portion, thereby further enhancing the sealing force.

According to still another aspect of the present disclosure, even if the electrolyte leaks through the first protrusion and the second protrusion, the battery housing is fitted into the insertion groove, and thus the electrolyte may be prevented from leaking to the outside of the battery housing. That is, the first protrusion, the second protrusion, and the insertion groove are provided along the path through which the electrolyte may leak, so that triple sealing may be achieved.

### DESCRIPTION OF DRAWINGS

FIG. 1 is a view showing a state before an electrolyte injection jig according to an embodiment of the present disclosure is connected to a battery and an electrolyte supply device.
FIG. 2 is a view showing a state in which an electrolyte injection jig according to an embodiment of the present disclosure is connected to a battery and an electrolyte supply device.
FIG. 3 is a view showing an electrolyte injection jig according to an embodiment of the present disclosure.
FIG. 4 is a view showing a partial cross-section of an electrolyte injection jig according to an embodiment of the present disclosure.
FIG. 5 is an enlarged view of a portion of FIG. 2.
FIG. 6 is a view showing a state in which an electrolyte injection jig according to an embodiment of the present disclosure is pressed toward a beading portion of a battery housing.
FIG. 7 is a view showing a state in which an electrolyte injection jig according to another embodiment of the present disclosure is pressed toward a beading portion of a battery housing.
FIG. 8 is a view showing a partial cross-section of an electrolyte injection jig according to an embodiment of the present disclosure.
FIG. 9 is a view showing a partial cross-section of a state in which an electrolyte injection jig according to an embodiment of the present disclosure is coupled to a battery housing.
FIG. 10 is a view showing a battery provided with a current collector.

### BEST MODE

Hereinafter, a preferred embodiment of the present disclosure will be described in detail with reference to the accompanying drawings. Since the accompanying drawings in this specification illustrate a preferred embodiment of the present disclosure, and together with the detailed description of the present disclosure described later, serve to further understand the technical aspects of the present disclosure, the present disclosure should not be construed as limited to what is shown in such drawings. The same reference numerals refer to the same components. Additionally, in the drawings, the thickness, ratio, and dimensions of the components may be exaggerated for effective description of the technical content.

The terms and words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the terms may vary depending on the position of the stated element or an observer.

Therefore, the embodiments described in this specification and the configurations shown in the drawings are only a most preferred embodiment of the present disclosure, not intended to entirely represent the technical aspects of the present disclosure, so it should be understood that various equivalents and modifications may be made thereto at the time of filing the present application.

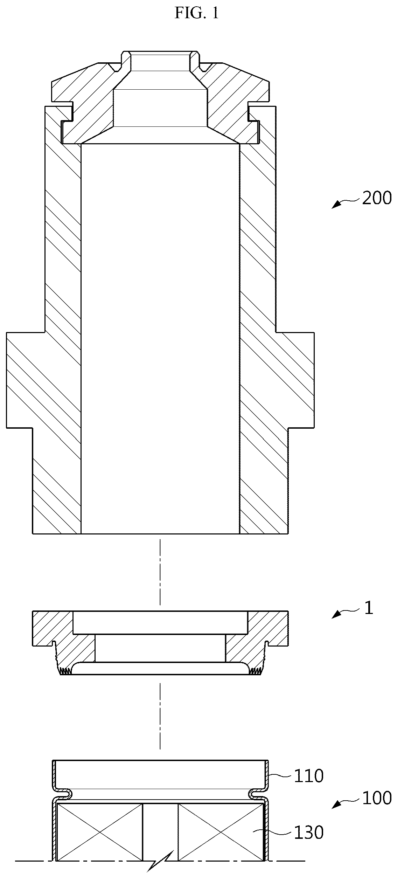

FIG. 1 is a view showing a state before an electrolyte injection jig 1 according to an embodiment of the present disclosure is connected to a battery 100 and an electrolyte supply device 200.

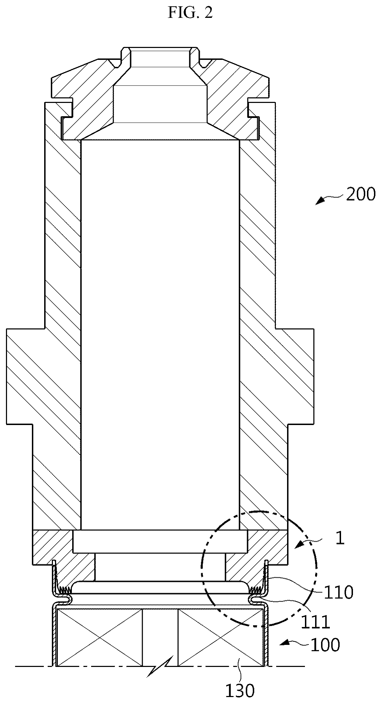

FIG. 2 is a view showing a state in which an electrolyte injection jig 1 according to an embodiment of the present disclosure is connected to a battery 100 and an electrolyte supply device 200.

Referring to FIGS. 1 and 2, an electrolyte injection jig 1 according to an embodiment of the present disclosure may connect an electrolyte supply device 200 and an opening of a battery housing 110.

The electrolyte injection jig 1 may function as a connector connecting the electrolyte supply device 200 and the battery housing 110. The electrolyte injection jig 1 may have a hollow structure to communicate with an internal space into which an electrolyte of the electrolyte supply device 200 is injected. The electrolyte injection jig 1 may have a center that is approximately cylindrical and hollow. The electrolyte injection jig 1 may have a shape corresponding to one end of the electrolyte supply device 200. The electrolyte injection jig 1 may be inserted into the battery housing 110. The electrolyte may be injected into the battery housing 110 accommodating the electrode assembly 130 through the electrolyte supply device 200 and the electrolyte injection jig 1.

The electrolyte injection jig 1 may be a sealing member for preventing leakage of the electrolyte in a region where the electrolyte is injected. The electrolyte injection jig 1 may include a flexible material for sealing. The electrolyte injection jig 1 may include a rubber material.

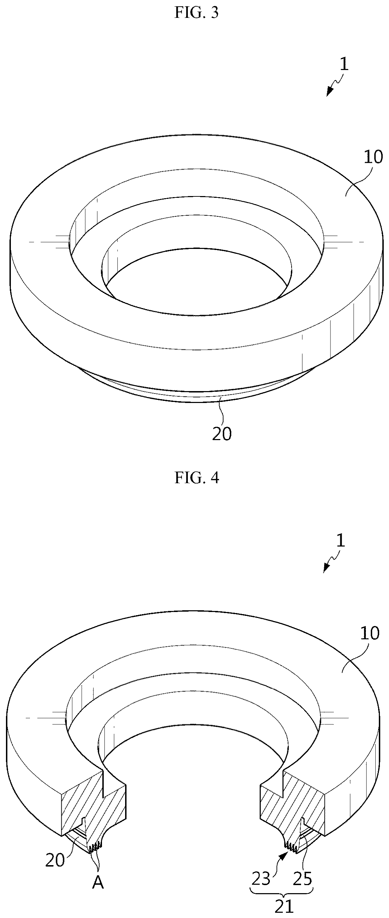

FIG. 3 is a view showing an electrolyte injection jig according to an embodiment of the present disclosure.

Referring to FIG. 3, the electrolyte injection jig 1 according to an embodiment of the present disclosure may include a device coupling portion 10 and a battery insertion portion 20.

The device coupling portion 10 may be configured to be coupled to the electrolyte supply device 200. The device coupling portion 10 may have a shape corresponding to one end of the electrolyte supply device 200.

The battery insertion portion 20 may be inserted into an opening of the battery housing 110. The battery insertion portion 20 may be inserted into an inner side of the battery housing 110. The battery insertion portion 20 may have a shape corresponding to the opening of the battery housing 110. The battery insertion portion 20 may be configured to be in close contact with an inner surface of the battery housing 110. The battery insertion portion 20 may have a protrusion 21 at a part in contact with the battery housing 110. The battery insertion portion 20 may have the protrusion 21 on an outer surface thereof. The protrusion 21 may protrude toward the battery housing 110.

According to this configuration of the present disclosure, the protrusion 21 may increase a contact area with the battery housing 110. The protrusion 21 may increase a frictional force with the battery housing 110 by protruding toward the battery housing 110. Therefore, the protrusion 21 may enhance a sealing force of the battery insertion portion 20 inserted into the battery housing 110.

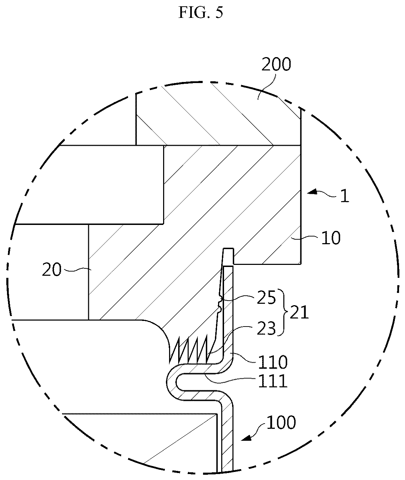

FIG. 4 is a view showing a partial cross-section of an electrolyte injection jig 1 according to an embodiment of the present disclosure. FIG. 5 is an enlarged view of a portion of FIG. 2.

Referring to FIGS. 4 and 5, the protrusion 21 may have a first protrusion 23 and a second protrusion 25.

The first protrusion 23 may be provided on a lower surface of the battery insertion portion 20. The first protrusion 23 may be provided at a part in contact with an upper portion of a beading portion 111 provided in the battery housing 110. The battery housing 110 may have the beading portion 111 formed by press-fitting a circumference of the battery housing 110 inward. The first protrusion 23 may be formed by protruding toward the beading portion 111.

The first protrusion 23 may extend along the circumference of the battery housing 110. The first protrusion 23 may include a plurality of wings A disposed adjacent to each other along a radial direction of the battery housing 110. The plurality of wings A may be disposed at equal intervals along the radial direction of the battery housing 110.

The second protrusion 25 may be provided on an outer circumferential surface of the battery insertion portion 20. The second protrusion 25 may be provided at a part in contact with an inner surface adjacent to an end of the battery housing 110. The second protrusion 25 may be configured to face the inner surface of the battery housing 110 between the open end of the battery housing 110 and the beading portion 111 of the battery housing 110. The second protrusion 25 may be formed to protrude toward the inner surface of the battery housing 110. The second protrusion 25 may be formed to protrude outward along the radial direction of the battery housing 110. The second protrusion 25 may extend along the circumference of the battery housing 110. The second protrusion 25 may include a plurality of protrusions disposed adjacent to each other along the height direction of the battery housing 110. The plurality of protrusions may be disposed at equal intervals along the height direction of the battery housing 110.

According to this configuration of the present disclosure, double sealing may be achieved by the first protrusion 23 in contact with the beading portion 111 of the battery housing 110 and the second protrusion 25 in contact with the inner surface adjacent to the end of the battery housing 110. It is possible to effectively prevent the electrolyte from leaking toward the opening of the battery housing 110 along the beading portion 111 of the battery housing 110. In particular, the sealing force may be enhanced by the first protrusion 23 including the plurality of wings A. The number of the plurality of wings A of the first protrusion 23 and the number of the plurality of protrusions of the second protrusion 25 may be adjusted depending on the required sealing force.

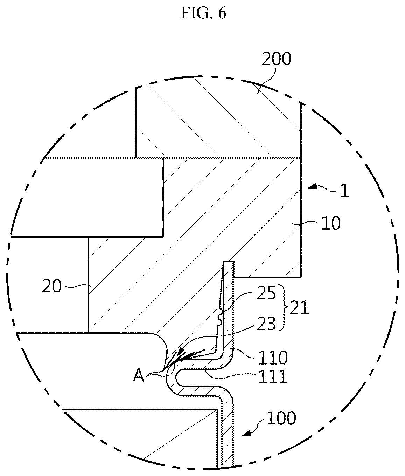

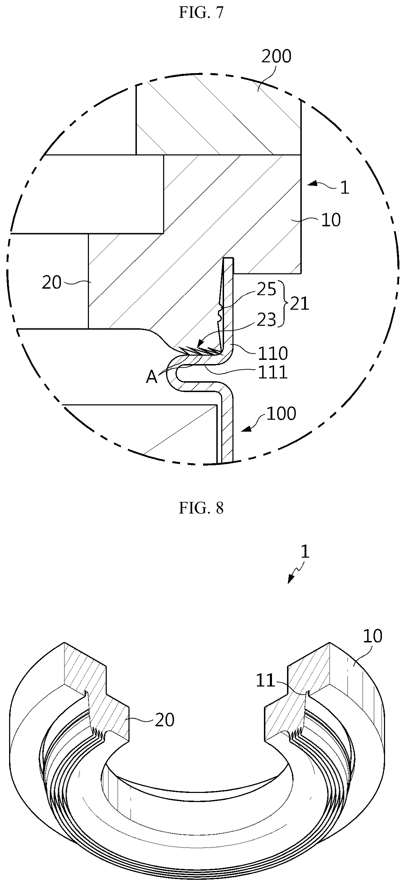

FIG. 6 is a view showing a state in which an electrolyte injection jig 1 according to an embodiment of the present disclosure is pressed toward a beading portion 111 of a battery housing 110. FIG. 7 is a view showing a state in which an electrolyte injection jig 1 according to another embodiment of the present disclosure is pressed toward a beading portion 111 of a battery housing 110.

Referring to FIGS. 6 and 7, as pressed toward the beading portion 111, the plurality of wings A may slide at ends thereof inward or outward along the radial direction of the battery 1. The plurality of wings A may undergo a bending deformation as they are pressed toward the beading portion 111. The plurality of wings A may be configured to in close contact with the beading portion 111 as they are pressed toward the beading portion 111. Some of the plurality of wings A may be configured to slide inward along the radial direction of the battery 1, and other portions may be configured to slide outward along the radial direction of the battery 1. For example, the wings A adjacent to the inner side along the radial direction of the battery 1 may be configured to slide inward along the radial direction of the battery 1, and the wings A adjacent to the outer side along the radial direction of the battery 1 may be configured to slide outward along the radial direction of the battery 1. Alternatively, the plurality of wings A may be configured to all slide in the same direction.

According to this configuration of the present disclosure, the inner surface of the beading portion 111 formed by press-fitting the circumference of the battery housing 110 inward may not be a completely flat surface, and other components may be positioned on the beading portion 111 (for example, a current collector 120 to be described later may be disposed on at least a portion of the circumference of the beading portion 111). Therefore, even if the end of the battery insertion portion 20 is brought into close contact with the beading portion 111, there is a possibility that the sealing at the contact interface between the battery insertion portion 20 and the beading portion 111 may be incomplete. Therefore, the end of the plurality of wings A may be configured to slide inward and/or outward along the radial direction of the battery 1 on the beading portion 111 to be in close contact with the beading portion 111, thereby further enhancing the sealing force.

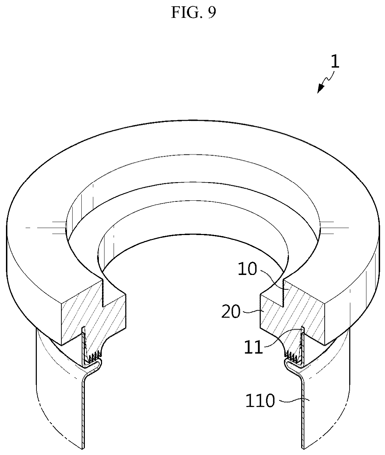

FIG. 8 is a view showing a partial cross-section of an electrolyte injection jig 1 according to an embodiment of the present disclosure. FIG. 9 is a view showing a partial cross-section of a state in which an electrolyte injection jig 1 according to an embodiment of the present disclosure is coupled to a battery housing 110.

Referring to FIGS. 8 and 9, the device coupling portion 10 may be configured to surround an end of the battery housing 110. An inner surface adjacent to the end of the battery housing 110 may be in close contact with the battery insertion portion 20, and an outer surface adjacent to the end of the battery housing 110 may be in close contact with the device coupling portion 10. The device coupling portion 10 may be formed along the circumference of the battery insertion portion 20. The device coupling portion 10 may have an insertion groove 11 configured to allow an end of the battery housing 110 to be inserted thereinto. The insertion groove 11 may have a width corresponding to a thickness of the battery housing 110.

According to this configuration of the present disclosure, even if the electrolyte leaks through the first protrusion 23 and the second protrusion 25, the battery housing 110 is fitted into the insertion groove 11, and thus the electrolyte may be prevented from leaking to the outside of the battery housing 110. That is, the first protrusion 23, the second protrusion 25, and the insertion groove 11 are provided along the path through which the electrolyte may leak, so that triple sealing may be achieved.

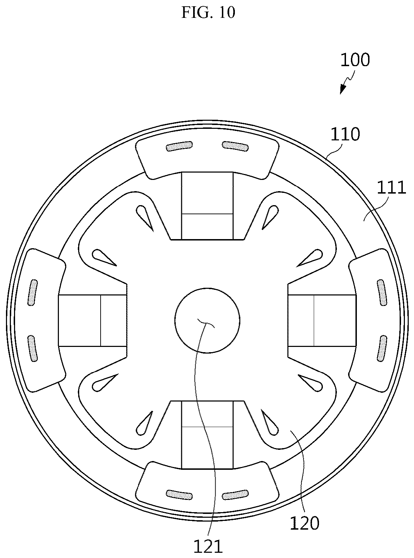

FIG. 10 is a view showing a battery 1 provided with a current collector 120.

Referring to FIG. 10, the electrolyte injection jig 1 may be applied to the battery 1 having the current collector 120 positioned on the beading portion 111 of the battery housing 110. The battery 1 may include the electrode assembly 130, the battery housing 110 that accommodates the electrode assembly 130, and the current collector 120 that is electrically connected to the electrode assembly 130 and configured to be connected to the beading portion 111 of the battery housing 110.

In this case, the battery insertion portion 20 may have the protrusion 21 at a part in contact with the battery housing 110 or the current collector 120. The battery insertion portion 20 may have the first protrusion 23 at a part corresponding to the upper portion of the beading portion 111 of the battery housing 110. That is, the first protrusion 23 may be configured such that a portion thereof is in contact with the beading portion 111 along the circumference, and the remaining portion thereof is in contact with the current collector 120.

The current collector 120 may be coupled to an uncoated portion provided on one surface of the electrode assembly 130. The current collector 120 may have a current collector hole 121. The current collector hole 121 may be formed at approximately the center of the current collector 120.

Next, an electrolyte injection method according to an embodiment of the present disclosure will be described. In describing the electrolyte injection method of the present disclosure, reference will be made to FIGS. 1 to 10 of the present disclosure as a whole.

The electrolyte injection method according to the present disclosure is an electrolyte injection method for injecting an electrolyte into the battery 1 through the opening formed on one side of the battery housing 110, and may include an insertion step, a seating step, a close contact step, and an injection step.

The insertion step may be a step of inserting the electrolyte injection jig 1 into the opening. The seating step may be a step of inserting the battery insertion portion 20 provided in the electrolyte injection jig 1 into the opening and seating it on the beading portion 111 provided in the battery housing 110. The close contact step may be a step of pressing the electrolyte injection jig 1 toward the insertion direction to allow the end of the battery insertion portion 20 to slide and to be in close contact with the upper portion of the beading portion 111. The injection step may be a step of injecting the electrolyte into the battery 1 through the electrolyte injection jig 1.

The close contact step may be a step of allowing the end of the battery insertion portion 20 to be folded inwardly or outwardly of the battery 1 at the upper portion of the beading portion 111.

In the electrolyte injection method of the present disclosure, the battery 1 may include the current collector 120 electrically connected to the electrode assembly 130 accommodated within the battery housing 110. The current collector 120 may be located on the beading portion 111. The current collector 120 may be connected to the battery housing 110 on the beading portion 111 discontinuously along the circumferential direction of the battery housing 110.

As described above, the present disclosure has been described mainly with preferred embodiments with reference to the accompanying drawings, but it is apparent to those skilled in the art that many and various obvious modifications are possible from this description without departing from the scope of the present disclosure. Therefore, the scope of the present disclosure should be construed by the claims which are written to include examples of such many modifications.

### [Explanation of Reference Signs]

1: electrolyte injection jig
10: device coupling portion
11: insertion groove
20: battery insertion portion
21: protrusion
23: first protrusion
25: second protrusion
100: battery
110: battery housing
111: beading portion
120: current collector
121: current collector hole
130: electrode assembly
200: electrolyte supply device
A: a plurality of wings

## Claims

1. An electrolyte injection jig, which is configured to connect an electrolyte supply device that supplies an electrolyte and an opening formed on one side of a battery housing, the electrolyte injection jig comprising:
a device coupling portion coupled to the electrolyte supply device and a battery insertion portion configured to be inserted into the opening and to be in close contact with an inner surface of the battery housing,
wherein the battery insertion portion has a protrusion at a part in contact with the battery housing.

2. The electrolyte injection jig according to claim 1,
wherein the protrusion has a first protrusion at a part in contact with an upper portion of a beading portion provided in the battery housing.

3. The electrolyte injection jig according to claim 1,
wherein the protrusion has a second protrusion at a part in contact with an inner surface adjacent to an end of the battery housing.

4. The electrolyte injection jig according to claim 2,
wherein the first protrusion comprises a plurality of wings that extend along a circumference of the battery housing and are disposed adjacent to each other along a radial direction of the battery housing.

5. The electrolyte injection jig according to claim 4,
wherein as pressed toward the beading portion, the plurality of wings are configured to slide at ends thereof inward or outward along a radial direction of a battery to be in close contact with the beading portion of the battery housing.

6. The electrolyte injection jig according to claim 1,
wherein the device coupling portion is configured to surround an end of the battery housing.

7. The electrolyte injection jig according to claim 6,
wherein the device coupling portion has an insertion groove formed along a circumference of the battery insertion portion and configured to allow an end of the battery housing to be inserted thereinto.

8. The electrolyte injection jig according to claim 7,
wherein the insertion groove has a width corresponding to a thickness of the battery housing.

9. An electrolyte injection method, which is a method for injecting an electrolyte into a battery through an opening formed on one side of a battery housing, the electrolyte injection method comprising:
an insertion step of inserting an electrolyte injection jig into the opening;
a seating step of inserting a battery insertion portion provided in the electrolyte injection jig into the opening and seating it on a beading portion provided in the battery housing;
a close contact step of pressing the electrolyte injection jig toward the insertion direction to allow an end of the battery insertion portion to slide and to be in close contact with an upper portion of the beading portion; and
an injection step of injecting an electrolyte into a battery through the electrolyte injection jig.

10. The electrolyte injection method according to claim 9,
wherein the close contact step is a step for allowing an end of the battery insertion portion to be folded inwardly or outwardly of a battery at an upper portion of the beading portion.

11. The electrolyte injection method according to claim 9,
wherein the battery comprises a current collector electrically connected to an electrode assembly accommodated within the battery housing,
wherein the current collector is located on the beading portion.

12. The electrolyte injection method according to claim 11,
wherein the current collector is connected to the battery housing on the beading portion discontinuously along a circumferential direction of the battery housing.
